# EUROPÄISCHE PATENTSCHRIFT

(11) **EP 1 130 971 B1**
(45) Veröffentlichungstag und Bekanntmachung des Hinweises auf die Patenterteilung: **27.08.2003**
(21) Anmeldenummer: 99963251.6
(22) Anmeldetag: 16.11.1999
(51) Int. Cl.: A21D 13/00, A47J 37/06

(54) **VORRICHTUNG UND VERFAHREN ZUR HERSTELLUNG EINES SANDWICHES**
APPARATUS AND PROCESS FOR THE PRODUCTION OF A SANDWICH
DISPOSITIF ET PROCEDE POUR LA PREPARATION D'UN SANDWICH

(30) Priorität: 18.11.1998 DE 19853032; 10.09.1999 DE 19943506
(43) Veröffentlichungstag der Anmeldung: 12.09.2001
(73) Patentinhaber: Steinbach, Ortwin, 88214 Ravensburg (DE); Ferstl, Marion, 88214 Ravensburg (DE)
(72) Erfinder: Steinbach, Ortwin, 88214 Ravensburg (DE); Ferstl, Marion, 88214 Ravensburg (DE)
(74) Vertreter: Roth, Klaus
(86) Internationale Anmeldenummer: DE9903641
(87) Internationale Veröffentlichungsnummer: WO00028829

(56) Entgegenhaltungen:
- BE-A- 836 132
- FR-A- 1 534 325
- FR-A- 2 407 698
- FR-A- 2 521 419
- GB-A- 1 440 266

## Beschreibung

Die Erfindung betrifft eine Vorrichtung zur Herstellung eines Sandwiches gemäß dem Oberbegriff des Anspruchs 1, und ein Verfahren gemäß Anspruch 10.

### Stand der Technik:

Sandwiches und deren Herstellungsverfahren sind in vielfältigen Ausführungsformen bekannt geworden. Bei einem sogenannten Sandwich-Toaster werden vorbereitete Toastbrotsandwiches, bei welchen in üblicher Weise zwischen den Toastbroten sich eine Einlage aus z. B. Schinken, Käse, Tomaten oder Ananas befindet, zwischen zwei im Wesentlichen parallel zueinander angeordnete waffeleisenartige Pfannenpaare des Sandwich-Toasters eingelegt und unter Druck und Hitze geröstet.

Auf diese Weise läßt sich in einem Arbeitsgang ein gefülltes Sandwich mit getoasteten Brotscheiben herstellen. Bei größervolumigen Einlagen ist es jedoch häufig der Fall, daß ein Teil der Einlage am Rand der Toastbrotscheiben beim Zusammenpressen herausgedrückt wird. Dies ist insofern kein Nachteil, als daß solche getoastete Sandwiches zum sofortigen Verzehr auf einem Teller vorgesehen sind. Daher ist eine seitlich am Sandwich herausquellende Einlage nicht weiter störend. Genauso wenig, daß das geröstete Sandwich trotz des Verpressvorgangs sich verhältnismäßig leicht wieder öffnet.

Sobald jedoch größere Stückzahlen solcher Sandwiches hergestellt werden, die für einen späteren Verzehr z. B. in kaltem Zustand vorgesehen sind, ist es insbesondere nicht erwünscht, daß ein Teil der Einlage die Außenseite des Sandwich bedeckt und gegebenenfalls aufweicht oder daß das Sandwich auseinanderfällt, wenn es z. B. nicht nur im flachen Zustand transportiert wird.

In der internationalen Patentanmeldung WO 94/09644 wird ein Sandwich und ein Verfahren zu dessen Herstellung beschrieben, bei welchem zwei Brotscheiben und eine Sandwicheinlage mittels eines Lebensmittelklebers verbunden werden. Zusätzlich kann diese Anordnung über Rollenelemente gepresst werden, damit sich die Einlage in die Brotscheiben eindrückt. Auf diese Weise erhält man zwar ein Sandwich, das einen sicheren Zusammenhalt aufweist, jedoch ist der Herstellungsprozeß durch den Kleberauftrag aufwendig. Darüber hinaus kann nach wie vor ein Teil der Einlage nach außen gelangen und gegebenenfalls die Außenseite des Sandwiches aufweichen oder beim Verzehr einen Teller oder eine Serviette notwendig machen.

Aus der französischen Patentanmeldung FR 7733508 ist eine Vorrichtung bekannt, mit welcher zwei Brotscheiben mit Einlage verpresst und an der Außenseite geröstet werden können, wobei die Brotscheiben entlang des Randes verschlossen sind.

Es hat sich jedoch herausgestellt, daß auf diese Weise hergestellte Sandwiches nach einer gewissen Lagerzeit oder beim Transport sich öffnen können oder ganz auseinanderfallen.

### Aufgabe und Vorteile der Erfindung:

Der Erfindung liegt die Aufgabe zugrunde, eine Vorrichtung zum Toasten von Sandwiches bereitzustellen, bei welcher Sandwiches entstehen, deren Einlage im Wesentlichen nicht nach außen gelangen kann und die Gefahr eines Auseinanderfallen des Sandwiches insbesondere z. B. beim Transportieren in unterschiedlichen Positionen reduziert ist.

Diese Aufgabe wird durch die Merkmale des Anspruchs 1 gelöst.

In den Unteransprüchen sind vorteilhafte und zweckmäßige Weiterbildungen der Erfindung angegeben.

Die Erfindung geht von einer Vorrichtung zum Toasten von Sandwiches mit zwei zueinander beweglichen, beheizbaren Pfannenelementen aus, wobei wenigstens ein Pfannenelement für einen wesentlichen Teil des umlaufenden Randbereichs einer Brotscheibe flächige Auflagemittel aufweist und der Pfannenbereich, der von den Auflagemitteln umrahmt wird, in Bezug auf die Auflageoberfläche der Auflagemittel tiefer liegt, so daß zwischen den Auflageelementen eingelegte übereinanderliegende Brotscheiben mit einer dazwischen angeordneten Einlage in einem umlaufenden flächigen Randbereich beim zusammenführen der Pfannenelemente deutlich stärker unter Druck und Hitze verpreßbar sind, als in den verbleibenden Abschnitten und die Brotscheiben durch den verpreßten umlaufenden Randbereich mit Einlage zu einer zusammenhaltenden Einheit verbunden werden. Der Kern der Erfindung liegt nun darin, dass die Pfannenelemente derart ausgestaltet sind, dass bei auf die Auflagemittel aufgelegten Brotscheiben beim Verpressen dennoch eine Verbindung des von den Auflagemitteln umrahmten Bereichs nach außen besteht. Durch diese Maßnahme wird erreicht, daß die beim Verpressen der Brotscheiben unter Hitzeeinwirkung von den Brotscheiben abgegebene Feuchtigkeit nach außen abströmen kann. Es soll gewissermaßen ein Luftaustausch der auf dem Pfannenelement aufliegenden Bereiche einer Brotscheibe mit der Umgebung stattfinden. Die Umsetzung dieser Erkenntnis bringt den Vorteil, daß die geröstete Oberfläche der Brotscheiben besonders kross wird und auch bei einer längeren Lagerung kross bleibt. Dies liegt daran, daß die Oberfläche durch diesen Prozess eine Karamellisierung (Prozess durch Erhitzung von Stärke und/oder Zucker im Brot) erfährt und dadurch sich die Oberflächenporen schließen. Aufgrund der versiegelten feuchtigkeitsabweisenden Oberfläche bleibt zudem die Verbindung der beiden Brotschichten im Randbereich stabil.

Außerdem ist es bevorzugt, wenn Verbindungen des von den Auflagemitteln umrahmten Bereichs entlang von gegenüberliegenden Randbereichen ausgebildet sind.

In einer weiteren vorteilhaften Ausgestaltung der Erfindung sind zur Erzielung einer Verbindung des von den Auflagemitteln umrahmten Bereich nach außen die Auflagemittel und/oder die Abschnitte des Pfannenelements in der Umgebung der Auflagemittel mit Durchbrechungen versehen. Sofern der von den Auflagemitteln umrahmte Pfannenbereich nutenartig gerillt ist, kann die Verbindung von diesem Bereich nach außen z. B. dadurch erreicht werden, daß die nutenartigen Rillen einfach unter den Auflagemitteln weiter nach außen geführt sind.

In einer besonders bevorzugten Ausgestaltung der Erfindung sind die beiden Pfannenelemente jeweils mit flächigen Auflagemitteln versehen, wobei die Auflagemittel an den Pfannenelementen so positioniert sind, daß sie im zusammengeführten Zustand der Pfannenelemente im Wesentlichen übereinander liegen. Dadurch wird eine starke Presswirkung auf den umlaufenden Randbereich der Brotscheiben gewährleistet.

Um eine ansprechende Optik der verpressten Brotscheiben zu erhalten und darüber hinaus eine krosse Brotoberfläche zu erzielen, wird im Weiteren vorgeschlagen, daß der Pfannenbereich, der von den Auflagemitteln umrahmt wird, mit einer Oberflächenstruktur versehen ist, beispielsweise geriffelt oder nutenartig gerillt ist.

Um eine gleichmäßige Toastung und gegebenenfalls Pressung des innen liegenden Bereichs der Brotscheiben zu erreichen, wird außerdem vorgeschlagen, daß der von den Auflagemitteln umrahmte Bereich ungeachtet einer Oberflächenstruktur im Wesentlichen eben ist.

Vorzugsweise bilden die Auflagemittel einen durchgehend verlaufenden Rahmen mit flächiger Auflage.

Um eine ausreichende Haftung der Brotscheiben aneinander zu erreichen, wird weiterhin vorgeschlagen, daß die Auflagebreite der umlaufenden Auflagemittel mindestens 4 mm beträgt. Die Auflageoberfläche der Auflagemittel kann in einer weiteren bevorzugten Ausgestaltung der Erfindung mit einer Oberflächenstruktur versehen sein. Günstigerweise ist diese Oberflächenstruktur auf eine Oberflächenstruktur von gegenüberliegenden Auflagemittel am anderen Pfannenelement abgestimmt.

Zur Erzielung einer möglichst gleichmäßigen Presswirkung auf den umlaufenden Rand der Brotscheiben, ist es in einer weiteren vorteilhaften Ausgestaltung der Erfindung bevorzugt, wenn die Pfannenelemente derart zueinander beweglich geführt sind, daß sie im zusammengeführten Zustand im Wesentlichen parallel zueinander ausgerichtet sind. Beispielsweise sind die Pfannenelemente über ein Klappscharnier verbunden, das zur Anpassung an unterschiedliche Sandwichdicken eine Einstellmöglichkeit des Abstandes der daran angelenkten Pfannenelemente besitzt.

### Zeichnungen:

Ein Ausführungsbeispiel der Erfindung ist in den Zeichnungen dargestellt und in der nachfolgenden Beschreibung unter Angabe weiterer Vorteile und Einzelheiten näher erläutert. Es zeigen
- Figur 1: ein erfindungsgemäßes Sandwich in einer perspektivischen Ansicht,
- Figur 2: eine Schnittansicht des Sandwiches nach Figur 1 entlang der Schnittlinie II-II,
- Figur 3: eine perspektivische Ansicht einer Vorrichtung zum Toasten von Sandwiches mit zwei zueinander klappbaren Gehäuseteilen,
- Figur 4: eine vergrößerte perspektivische Ansicht eines Gehäuseteils mit Pfannenelement der Vorrichtung gemäß Figur 3 und
- Figur 5: das perspektivisch dargestellte Pfannenelement gemäß Figur 4 in einer Draufsicht.

### Beschreibung des Ausführungsbeispiels:

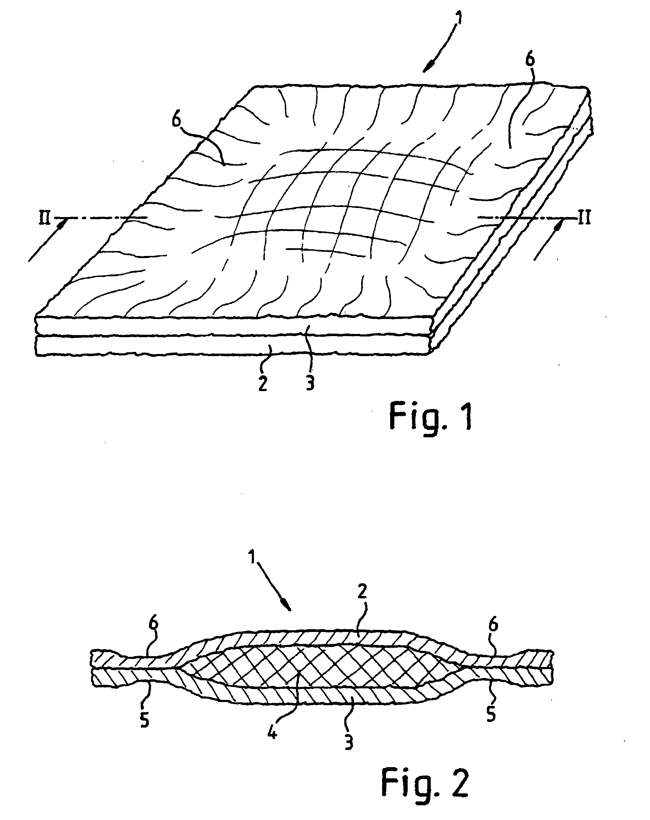

Das erfindungsgemäße Sandwich 1 gemäß der Figuren 1 und 2 besteht aus zwei Toastbrotscheiben 2, 3, die beispielhaft eine Fleischfüllung 4 vollständig umschließen. Die beiden Toastbrotscheiben 2, 3 sind jeweils am äußeren Rand 5, 6 unter Hitzeeinwirkung zusammengepresst, so daß die Toastbrotscheiben 2, 3 gut aneinander haften und gewährleistet ist, daß die Fleischfüllung 4 nicht nach außen gelangt.

Zur Herstellung des Sandwiches 1 wird auf die Toastbrotscheibe 3 im innen liegenden Bereich der Toastbrotscheibenoberfläche eine rohe Fleischmasse aufgebracht. Anschließend wird die Toastbrotscheibe 2 deckend darüber angeordnet. Diese Sandwichanordnung wird dann unter Hitze und Druck verpresst, so daß einerseits die Außenseiten der Toastbrotscheiben geröstet werden, die eingebrachte Fleichmasse 4 gegart wird und zusätzlich die Toastbrotscheiben 2, 3 in jeweils vorwiegend deren Randbereichen 5, 6 verpresst werden. Damit wird zwar in diesen Bereichen die Dicke der Brotscheiben deutlich reduziert, jedoch haften die Brotscheiben dadurch auch gut aneinander, da die Klebewirkung der im Brot enthaltenen Bestandteile unter Hitze genutzt wird.

Das Endprodukt ist ein geröstetes mit Füllung bzw. Einlage (hier sei nur beispielhaft eine Fleischfüllung 4 angegeben) versehenes Sandwich, das vorzugsweise im kalten Zustand verzehrt wird, z. B. als eine Art "Pausensnack".

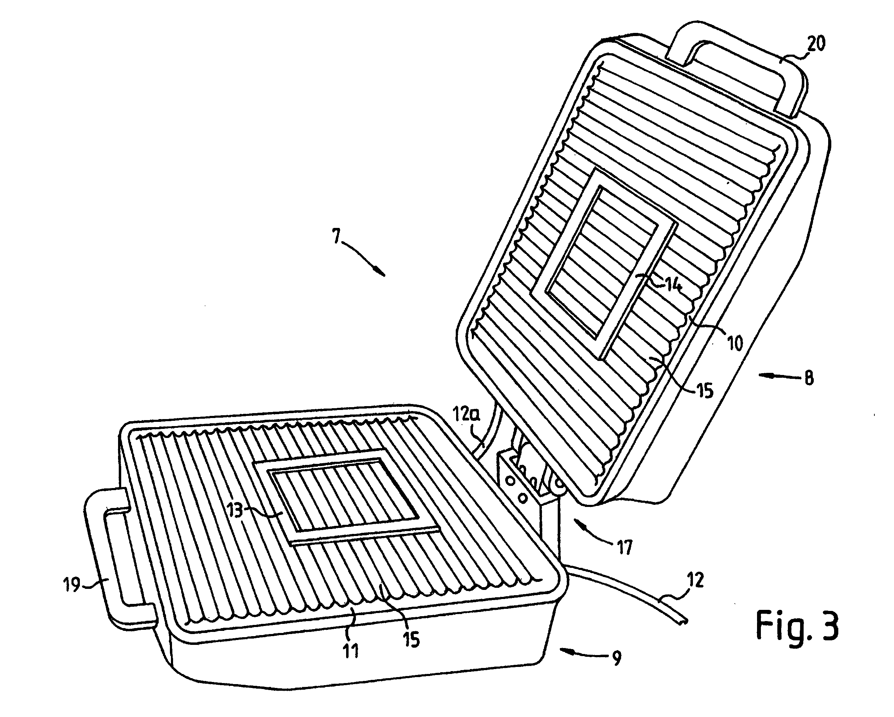

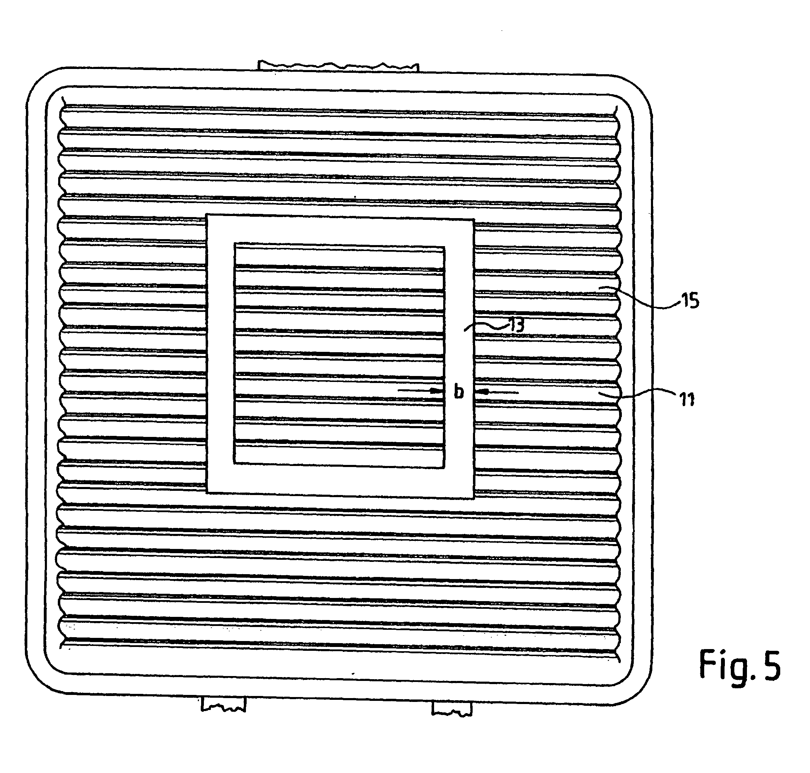

In den Figuren 3 bis 5 ist ein Sandwichtoaster 7 zur Herstellung eines erfindungsgemäßen Sandwiches 1 dargestellt. Der Sandwichtoaster 7 umfaßt zwei zueinander beweglich angebrachte Gehäuseteile 8, 9. Auf der Innenseite jedes Gehäuseteils 8, 9 ist ein Pfannenelement 10, 11 angeordnet. Die Pfannenelemente 10, 11 bestehen beispielsweise aus Gußeisen und können von der Rückseite über nicht zu sehende Heizelemente, ähnlich wie bei einem Waffeleisen, beheizt werden. Die Heizung erfolgt elektrisch über ein Anschlußkabel 12 bzw. ein Verbindungskabel 12a zwischen den Gehäuseteilen. Die Pfannenelemente 10, 11 besitzen eine parallel verlaufende Rillung aus nutenartigen Vertiefungen 15. Auf den Pfannenelementen 10, 11 ist jeweils ein Auflagerahmen 13, 14 fest angeordnet. Die Auflagerahmen 13, 14 sind so positioniert, daß diese im zusammengeklappten Zustand der Pfannenelemente 10, 11 übereinander liegen. Die Außenabmessungen der Rahmenelemente entspricht vorzugsweise den Außenabmessungen von zu verpressenden Brotscheiben, im vorliegenden Fall beispielhaft Toastbrotscheiben. Das heißt, die Auflagerahmen 13, 14 sind quadratisch. Die Breite b der Auflagerahmen beträgt beispielsweise 10 mm, sollte jedoch nicht kleiner als 4 mm sein, um eine ausreichende Verbindung von Toastbrotscheiben gewährleisten zu können.

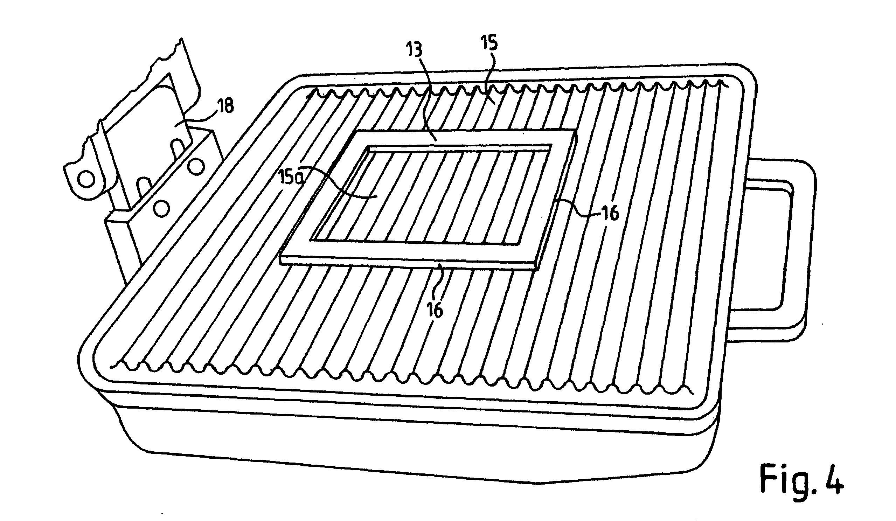

In Figur 4 wird ersichtlich, daß die "Rillung" 15 unter den Auflagerahmen 13, 14 durchläuft. Damit steht ein von den Auflagerahmen 13, 14 umrahmter Bereich 15a des jeweiligen Pfannenelements auch bei aufgelegter Toastbrotscheibe (nicht dargestellt) nach wie vor mit außen liegenden Bereichen in Verbindung. Auf diese Weise kann beim Pressvorgang unter Hitzeeinwirklung aus den Brotscheiben frei werdende Feuchtigkeit sofort abströmen, wodurch die Oberfläche der verpressten Brotscheiben besonders kross wird und auch nach längerer Lagerung, beispielsweise im Kühlschrank, kross bleibt. Darüber hinaus wird hierdurch eine besonders gute Verbindung der verpressten Randbereiche der Brotscheiben erzielt. Man könnte diesen Effekt auch als "Zwiebackeffekt" bezeichnen.

Zur Herstellung eines erfindungsgemäßen Sandwiches 1 wird beispielsweise auf den Auflagerahmen 13 eine erste Toastbrotscheibe so abgelegt, daß sie an den Rändern jeweils mit der Außenkante 16 des Auflagerahmens 13 abschließt. Dann wird auf der Toastbrotscheibe eine Einlage im inneren Bereich der Toastbrotscheibenoberfläche plaziert. Anschließend wird eine zweite Toastbrotscheibe passend ausgerichtet darüber gelegt.

Daraufhin wird der ausreichend vorgeheizte Sandwichtoaster 7 geschlossen, wodurch insbesondere die umlaufenden Randbereiche der Toastbrotscheiben unter Druck und Hitze verpresst werden und eine innige Verbindung eingehen. Die innen liegenden Bereiche der Toastbrotscheiben werden nur leicht gepresst, erhalten jedoch eine optisch ansprechende getoastete und gerillte Oberfläche. Bei diesem Vorgang kann aus der Sandwichanordnung austretende Feuchtigkeit nach außen abströmen.

Das Klappscharnier 14, an welchem die Gehäuseteile 8, 9 mit Pfannenelementen 10, 11 aneinandergelenkt ist, läßt sich über einen höhenverstellbaren Schenkel 18 so justieren, daß unabhängig von der Dicke der Toastbrotscheiben bei geschlossenem Sandwichtoaster 7 die Auflagerahmen 13, 14 immer im Wesentlichen parallel zueinander ausgerichtet werden können. Zum Klappen der Gebäuseteile 8, 9 ist daran jeweils ein Handgriff 19, 20 angeordnet.

Auf den Pfannenelementen können auch mehrere Rahmenelemente für unterschiedliche Größen und Formen von Brotscheiben positioniert werden, oder die Pfannenelemente 10, 11 und/oder die Auflagerahmen 13, 14 werden als leicht austauschbare Wechselbauteile ausgebildet.

Auch die Oberflächenstruktur der Pfannenelemente läßt sich auf vielfältige Art und Weise realisieren, beispielsweise auch mit einer Kreuzriffelung oder dergleichen.

Im Weiteren können die Rahmenelemente so ausgestaltet werden, daß übereinaderliegende Brotscheiben in z. B. zwei oder mehr Bereiche mit umlaufendem verpresstem Randbereich aufgeteilt werden, in welchem unterschiedliche Füllungen eingebracht sind.

### Bezugszeichenliste:

- 1: Sandwich
- 2: Toastbrotscheibe
- 3: Toastbrotscheibe
- 4: Fleischfüllung
- 5: Randbereich
- 6: Randbereich
- 7: Sanwichtoaster
- 8: Gehäuseteil
- 9: Gehäuseteil
- 10: Pfannenelement
- 11: Pfannenelement
- 12: Anschlußkabel
- 12a: Verbindungskabel
- 13: Auflagerahmen
- 14: Auflagerahmen
- 15: nutenartige Vertiefung
- 15a: umrahmter Bereich
- 16: Außenkante
- 17: Klappscharnier
- 18: Scharnierschenkel
- 19: Handgriff
- 20: Handgriff

## Patentansprüche

1. Vorrichtung zum Toasten von Sandwiches mit zwei zueinander beweglichen, beheizbaren Pfannenelementen (10, 11), wobei wenigstens ein Pfannenelement für einen wesentlichen Teil eines umlaufenden Randbereichs einer Brotscheibe flächige Auflagemittel (13, 14) aufweist und der Pfannenbereich (15a), der von den Auflagemitteln umrahmt wird, in Bezug auf die Auflageoberfläche der Auflagemittel (13, 14) tiefer liegt, so dass zwischen den Pfannenelementen (10, 11) eingelegte übereinanderliegende Brotscheiben mit einer dazwischen angeordneten Einlage in einem umlaufenden flächigen Randbereich beim Zusammenführen der Pfannenelemente (10, 11) deutlich stärker unter Druck und Hitze verpressbar sind, als in den verbleibenden Abschnitten und die Brotscheiben durch den verpressten und umlaufenden Randbereich mit Einlage zu einer zusammenhaltenden Einheit verbunden werden, **dadurch gekennzeichnet, dass** die Pfannenelemente (10, 11) derart ausgestaltet sind, dass bei auf die Auflagemittel (13, 14) aufgelegten Brotscheiben beim Verpressen dennoch eine Verbindung des von den Auflagemitteln umrahmten Bereichs (15a) entlang von gegenüberliegenden Randbereichen nach außen besteht.

2. Vorrichtung nach Anspruch 1, **dadurch gekennzeichnet, dass** die Verbindung des von den Auflagemitteln umrahmten Bereichs (15a) entlang von gegenüberliegenden Randbereichen ausgebildet ist.

3. Vorrichtung nach Anspruch 1 oder 2, **dadurch gekennzeichnet, daß** beide Pfannenelemente (10, 11) gemäß Anspruch 1 ausgestaltet sind, wobei die Auflagemittel an den Pfannenelementen (13, 14) so positioniert sind, daß sie in zusammengeführtem Zustand der Pfannenelemente (10, 11) im Wesentlichen übereinander liegen.

4. vorrichtung nach einem der vorhergehenden Ansprüche, **dadurch gekennzeichnet, daß** der Bereich (15a) der Pfannenelemente, der von den Auflagemitteln (13, 14) umrahmt wird, mit einer Oberflächenstruktur versehen ist.

5. Vorrichtung nach einem der vorhergehenden Ansprüche, **dadurch gekennzeichnet, daß** die rahmenförmigen Auflagemittel (13, 14) und/oder die Abschnitte des Pfannenelements (10, 11) in der Umgebung der Auflagemittel Durchbrechungen vom umrahmten Bereich (15a) nach außen aufweisen.

6. Vorrichtung nach einem der vorhergehenden Ansprüche, **dadurch gekennzeichnet, daß** der von den Auflagemitteln umrahmte Bereich (15a) ungeachtet einer Oberflächenstruktur im Wesentlichen eben ist.

7. Vorrichtung nach einem der vorhergehenden Ansprüche, **dadurch gekennzeichnet, daß** die Auflagemittel (13, 14) einen durchgehend verlaufenden Rahmen mit flächiger Auflage bilden.

8. Vorrichtung nach einem der vorhergehenden Ansprüche, **dadurch gekennzeichnet, daß** die Auflagebreite (b) der umlaufenden Auflagemittel mindestens 4 mm beträgt.

9. Vorrichtung nach einem der vorhergehenden Ansprüche, **dadurch gekennzeichnet, daß** die Pfannenelemente (10, 11) derart zueinander beweglich geführt sind, daß sie in zusammengeführtem Zustand im Wesentlichen parallel zueinander ausgerichtet sind.

10. Verfahren zur Herstellung eines gerösteten Sandwiches, bestehend aus zwei Brotscheiben und einer zwischen den Brotscheiben vorhandenen essbaren Einlage, mit zwei zueinander beweglichen, beheizbaren Pfannenelementen (10, 11), wobei wenigstens ein Pfannenelement für einen wesentlichen Teil eines umlaufenden Randbereichs einer Brotscheibe flächige Auflagemittel (13, 14) aufweist und der Pfannenbereich (15a), der von den Auflagemitteln umrahmt wird, in Bezug auf die Auflageoberfläche der Auflagemittel (13, 14) tiefer liegt, so dass zwischen den Pfannenelementen (10, 11) eingelegte übereinander liegende Brotscheiben mit einer dazwischen angeordneten Einlage in einem umlaufenden flächigen Randbereich beim Zusammenführen der Pfannenelemente (10, 11) deutlich stärker unter Druck und Hitze verpresst werden als in den verbleibenden Abschnitten und die Brotscheiben durch den verpressten und umlaufenden Randbereich mit Einlage zu einer zusammenhaltenden Einheit verbunden werden, **dadurch gekennzeichnet, dass** die Brotscheiben mittels einer Verbindung nach außen des von den Auflagemitteln umrahmten Bereichs derart verpresst werden, dass unter Hitzeeinwirkung vom von den Auflagemitteln (13, 14) umrahmten Bereich der Brotscheiben abgegebene Feuchtigkeit nach außen abströmen kann.

## Claims

1. Appliance for toasting sandwiches, comprising two heatable pan elements (10, 11) which can move with respect to each other, wherein at least one pan element has flat support means (13, 14) for a substantial part of a peripheral edge region of a bread slice, and the pan region (15a) framed by the support means lies at a lower level with respect to the supporting surface of the support means (13, 14) such that bread slices, which are inserted between the pan elements (10, 11) to lie one above the other with a filling layer arranged in-between, can be pressed together under pressure and heat when the pan elements (10, 11) are brought together significantly more strongly in a peripheral, flat edge region than in the remaining sections, and the bread slices are connected by the pressed-together peripheral edge region, with the filling layer, to form a unit which holds together, **characterised in that** the pan elements (10, 11) are designed such that when the bread slices are placed onto the support means (13, 14) the region (15a) framed by the support means is still connected to the outside along opposite edge regions when the pressing-together process takes place.

2. Appliance according to claim 1, **characterised in that** the connection of the region (15a) framed by the support means is formed along opposite edge regions.

3. Appliance according to claim 1 or 2, **characterised in that** both pan elements (10, 11) are designed in accordance with claim 1, the support means being positioned on the pan elements (13, 14) so as to substantially lie one above the other in the brought-together state of the pan elements (10, 11).

4. Appliance according to any of the preceding claims, **characterised in that** the region (15a) of the pan elements framed by the support means (13, 14) is provided with a surface structure.

5. Appliance according to any of the preceding claims, **characterised in that** the frame-shaped support means (13, 14) and/or the sections of the pan element (10, 11) in the vicinity of the support means have apertures from the framed region (15a) to the outside.

6. Appliance according to any of the preceding claims, **characterised in that** the region (15a) framed by the support means is substantially planar despite a surface structure.

7. Appliance according to any of the preceding claims, **characterised in that** the support means (13, 14) forms a continuously running frame with a flat support.

8. Appliance according to any of the preceding claims, **characterised in that** the supporting width (b) of the peripheral support means is at least 4 mm.

9. Appliance, according to any of the preceding claims, **characterised in that** the pan elements (10, 11) are guided so as to be movable with respect to each other in such a way that they are aligned substantially parallel to each other in the brought-together state.

10. Method for producing a toasted sandwich, consisting of two bread slices and an edible insert provided between the bread slices, with two heatable pan elements (10, 11) which can be moved with respect to one another, wherein at least one pan element has a flat support means (13, 14) for a substantial part of a peripheral edge region of a bread slice, and the pan region (15a) framed by the support means lies at a lower level with respect to the supporting surface of the support means (13, 14) such that bread slices which are inserted between the pan elements (10, 11) to lie one above the other with a filling layer arranged in between, can be pressed together under pressure and heat when the pan elements (10, 11) are brought together significantly more strongly in a peripheral, flat edge region than in the remaining sections, and the bread slices are connected by the pressed-together peripheral edge region, with the filling layer, to form a unit which holds together, **characterised in that** the bread slices are pressed together by means of a connection to the outside of the region framed by the support means, such that moisture given off by the region of the bread slices framed by the support means (13, 14) can flow away to the outside under the action of heat.

## Revendications

1. Dispositif pour griller des sandwichs, comportant deux éléments de gril (10, 11) pouvant être chauffés, mobiles l'un par rapport à l'autre, au moins un élément de gril présentant, pour une partie essentielle d'une zone marginale périphérique d'une tranche de pain, des moyens d'appui plats (13, 14) et la zone de gril (15a), qui est encadrée par les moyens d'appui, étant plus profonde par rapport à la surface d'appui des moyens d'appui (13, 14), de sorte que des tranches de pain disposées l'une sur l'autre introduites entre les éléments de gril (10, 11) avec une garniture agencée entre elles peuvent être pressées notablement plus fortement sous pression et chaleur dans une zone marginale plate périphérique par réunion des éléments de gril (10, 11) que dans les tronçons restants, et les tranches de pain sont reliées par la zone marginale périphérique et pressée avec la garniture en une unité cohérente,
**caractérisé en ce que** les éléments de gril (10, 11) sont réalisés de sorte que, pour des tranches de pain disposées sur les moyens d'appui (13, 14), lors du pressage, en conséquence, il existe une liaison de la zone (15a) encadrée par les moyens d'appui le long de zones marginales opposées vers l'extérieur.

2. Dispositif selon la revendication 1,
**caractérisé en ce que** la liaison de la zone encadrée par les moyens d'appui (15a) est réalisée le long de zones marginales opposées.

3. Dispositif selon la revendication 1 ou 2,
**caractérisé en ce que** les deux éléments de gril (10, 11) sont réalisés selon la revendication 1, les moyens d'appui étant positionnés sur les éléments de gril (13, 14) de sorte que, dans l'état réuni des éléments de gril (10, 11), ils sont généralement superposés.

4. Dispositif selon une des revendications précédentes,
**caractérisé en ce que** la zone (15a) des éléments de gril, qui est encadrée par les moyens d'appui (13, 14), est munie d'une structure de surface.

5. Dispositif selon une des revendications précédentes,
**caractérisé en ce que** les moyens d'appui en forme de cadre (13, 14) et/ou les tronçons de l'élément de gril (10, 11) présentent, dans l'environnement des moyens d'appui, des évidements de la zone encadrée (15a) vers l'extérieur.

6. Dispositif selon une des revendications précédentes,
**caractérisé en ce que** la zone (15a) encadrée par les moyens d'appui, sans tenir compte d'une structure de surface, est généralement plane.

7. Dispositif selon une des revendications précédentes,
**caractérisé en ce que** les moyens d'appui (13, 14) forment un cadre s'étendant de façon continue ayant un appui plat.

8. Dispositif selon une des revendications précédentes,
**caractérisé en ce que** la largeur d'appui (b) des moyens d'appui périphériques vaut au moins 4 mm.

9. Dispositif selon une des revendications précédentes,
**caractérisé en ce que** les éléments de gril (10, 11) sont guidés de façon mobile l'un par rapport à l'autre de sorte que, dans l'état réuni, ils sont orientés de façon généralement parallèle l'un par rapport à l'autre.

10. Procédé pour préparer un sandwich grillé, constitué de deux tranches de pain et d'une garniture comestible présente entre les tranches de pain, comportant deux éléments de gril (10, 11) pouvant être chauffés, mobiles l'un par rapport à l'autre, au moins un élément de gril présentant, pour une partie essentielle d'une zone marginale périphérique d'une tranche de pain, des moyens d'appui plats (13, 14) et la zone de gril (15a), qui est encadrée par les moyens d'appui, étant plus profonde relativement à la surface d'appui des moyens d'appui (13, 14), de sorte que des tranches de pain superposées introduites entre les éléments de gril (10, 11) avec une garniture agencée entre elles sont pressées, dans une zone marginale plate périphérique, lors de la réunion des éléments de gril (10, 11), de façon notablement plus forte sous pression et chaleur que dans les tronçons restants, et les tranches de pain sont reliées par la zone marginale périphérique et pressée avec la garniture en une unité cohérente, **caractérisé en ce que** les tranches de pain sont pressées au moyen d'une liaison vers l'extérieur de la zone encadrée par les moyens d'appui de sorte que, sous l'action de la chaleur, l'humidité évacuée de la zone, encadrée par les moyens d'appui (13, 14), des tranches de pain peut s'échapper vers l'extérieur.
